# EUROPEAN PATENT SPECIFICATION

(11) **EP 3 432 331 B1**
(45) Date of publication and mention of the grant of the patent: **21.07.2021**
(21) Application number: 16894677.0
(22) Date of filing: 25.10.2016
(51) Int. Cl.: H01G 11/08, H01G 11/10, H01G 2/04

(54) **CONNECTION STRUCTURE FOR ENERGY STORAGE MODULE**
VERBINDUNGSSTRUKTUR FÜR EIN ENERGIESPEICHERMODUL
STRUCTURE DE CONNEXION POUR MODULE DE STOCKAGE D'ÉNERGIE

(30) Priority: 16.03.2016 KR 20160031322
(43) Date of publication of application: 23.01.2019
(73) Proprietor: LS Mtron Ltd., Gyeonggi-do 14119 (KR)
(72) Inventor: SON, Sang-Woo, Suwon-si, Gyeonggi-do 16435 (KR); LEE, Jung-Gul, Anyang-si, Gyeonggi-do 13909 (KR)
(74) Representative: Botti, Mario
(86) International application number: PCT/KR2016/012017
(87) International publication number: WO 2017/159947

(56) References cited:
- EP-A1- 1 843 361
- EP-A1- 2 587 504
- EP-A1- 2 692 001
- JP-A- 2008 204 981
- KR-A- 20130 080 240
- US-A1- 2007 008 676
- US-A1- 2007 020 513
- US-A1- 2007 086 146
- US-A1- 2007 195 485
- US-A1- 2008 002 328
- US-A1- 2009 096 418
- US-A1- 2013 266 826

## Description

### TECHNICAL FIELD

The present application claims priority to Korean Patent Application No. 10-2016-0031322 filed on March 16, 2016 in the Republic of Korea.

The present disclosure relates to a connection structure for an energy storage module, and more particularly, to a connection structure for an energy storage module, which configures an electrical connection structure in an energy storage module storing electric energy by using a plurality of energy storage cells.

### BACKGROUND ART

An energy storage module is an assembly for high voltage, configured using a high-capacitance storage device that stores electric energy such as an ultra-capacitor, a super capacitor and an electric double layer capacitor as a unit energy storage cell.

In the energy storage module, if the voltage balance is not maintained between the unit energy storage cells, the cell is aged or its capacity decrease, and further, the cell may be damaged or exploded due to the overcharge or overdischarge. To prevent this, an energy balancing circuit is installed at the energy storage module to perform energy balancing for the energy storage cells to maintain voltage balance between the cells.

However, as disclosed in Korean Patent No. 10-1292276 and Korean Unexamined Patent Publication No. 10-2014-0121926, in the existing technologies, a harness having a plurality of insulation wires is used to electrically connect each energy storage cell electrode to a corresponding energy balancing circuit terminal, and thus it is highly likely to cause erroneous wiring, short circuit due to covering damage, or disconnection during the wiring work. The problems of the wiring system cause malfunction of the energy balancing circuit, which may lead to not only cell aging and capacity reduction but also serious problems such as explosion as mentioned above.

In addition, in the existing technologies, electrodes of a plurality of energy storage cells are connected to a plurality of bus bars, and wires of the harness are individually distinguished and coupled to the corresponding bus bars and energy balancing circuits.

For this reason, a lot of manpower and time are demanded, and additional work such as wiring processing is required, thereby complicating the assembling process for the energy storage module.

Further complex arrangements to interconnect energy storage cells have been disclosed in the art. In particular, US 2009/096418 discloses an energy storage device containing multiple energy storage cells; it includes a rigid vertical connection element having a lower end connected to a power bar below the energy storage cell and an upper end connected to an horizontal connection element above the cell; the vertical connection element, having rectangular traverse section, has a lug bent extending in a horizontal direction which, in turn, is connected to the power bar by means of a separate screw.

JP 2008-204981 discloses a plurality of capacitors having electrodes on both end faces and arranged side by side, a first bus bar electrically connecting one electrode of one of adjacent capacitors and the plurality of capacitors; a second bus bar that electrically connects the other electrodes adjacent to each other, a circuit board arranged on one or the other electrode side of the plurality of capacitors, the first bus bar and the capacitor unit comprising: a first conductive part that connects a circuit board; and a second conductive part that connects the second bus bar and the circuit board; in this device, the bus bar and the conductive portion are formed integrally or connected to each other by welding.

EP 2 587 504 discloses a capacitor assembly comprising a plurality of capacitor elements and a conductive path for electrically connecting the plurality of capacitor elements to at least one circuit element disposed proximate the adjacent mounting surface; mounting screws are described inter alia as component for the mere mechanical, i.e. non-electrical coupling of the neighboring elements.

EP 1 843 361 A1 discloses a capacitor device containing a plurality of capacitors and a metal case containing the capacitor elements and an electrolyte, where the capacitors use the metal case as respectively negative or positive electrode; a prop is inter alia described as component for the mechanical coupling of the neighboring elements.

EP 2 692 001 discloses a battery comprising a plurality of battery cells arranged axially parallel next to one another in at least two rows and an electrically conductive element by means of which a terminal of the battery cells is connected to a connecting element connecting the battery to the motor vehicle, wherein the electrically conductive element is arranged at least partly between the two rows.

US 2007/086146 discloses a capacitor bank comprising a positive assembly having a planar outer surface and a positive electrical terminal, a negative assembly having a planar outer surface and a negative electrical terminal, a capacitor sandwiched between and electrically coupled to the positive and negative assemblies and electrical interconnects coupled to each of the terminals and for coupling to another capacitor bank. US2007195485A1 discloses a circuit arrangement designed as a module with a chain of connected (preferably in a row) capacitors or double-layered capacitors arranged on a base plate. The capacitor being connected to the circuit board through bolts.

### DISCLOSURE

### Technical Problem

The present disclosure is designed to solve the problems of the related art, and therefore the present disclosure is directed to providing a connection structure for an energy storage module, which may prevent malfunction of an energy balancing circuit, save manpower and time consumed in the wiring work and simplify the assembling process for the energy storage module by solving erroneous wiring or disconnection problems, which occur when a harness is used for the wiring work.

### Technical Solution

In one aspect of the present disclosure, there is provided a connection structure for an energy storage module as defined in claim 1, which configures an electrical connection structure in an energy storage module that stores electric energy by using a plurality of energy storage cells, the connection structure comprising: a bus bar having a plate shape, the bus bar having both ends respectively coupled to electrodes of different energy storage cells; and a rod member having a rod shape, the rod member having one end coupled to the bus bar and the other end coupled to a board of a balancing circuit that performs energy balancing so that the electrode of the energy storage cell to which the bus bar is coupled is electrically connected to the balancing circuit.

Wherein, one end of the rod member may be screwed to the bus bar. Wherein, one end of the rod member may have a thread formed at an outer circumference thereof, and the bus bar may have a screw groove screwed to one end of the rod member.

Wherein, the rod member may have an outer circumference of a polygonal shape to facilitate the screwing.

Wherein, the other end of the rod member may be inserted into a predetermined insert hole provided at the board and electrically connected to a terminal of the balancing circuit.

Wherein, the other end of the rod member may have a screw groove to which a predetermined bolt member is screwed.

Wherein, the other end of the rod member may be electrically connected to the terminal of the balancing circuit by the bolt member coupled to the screw groove.

### Advantageous Effects

According to the present disclosure, since the electrode of the energy storage cell and the energy balancing circuit are electrically connected through the rod member coupled to the bus bar, it is possible to solve erroneous wiring or disconnection problems caused by using a harness and prevent the energy balancing circuit from malfunctioning.

Also, when an energy balancing circuit board is installed, the rod members connected to the bus bar are inserted into the insert holes of the board provided at predetermined positions, respectively, and connected to the corresponding energy balancing circuits just by bolt fastening, and thus it is possible to save manpower and time consumed in the wiring work and simplify the assembly process for the energy storage module.

### DESCRIPTION OF DRAWINGS

FIG. 1 is a perspective view showing an energy storage module according to an embodiment of the present disclosure.
FIG. 2 is an exploded perspective view showing a balancing circuit board of the energy storage module depicted in FIG. 1, in a separated state.
FIG. 3 is a perspective view showing a connection structure for an energy storage module according to an embodiment of the present disclosure.
FIG. 4 is an exploded perspective view showing the connection structure for an energy storage module according to an embodiment of the present disclosure.
FIG. 5 is an exploded perspective view showing a connection structure for an energy storage module according to another embodiment of the present disclosure.
FIG. 6 is a vertical sectioned view, taken along the line X-X' of FIG. 1.
FIG. 7 is an enlarged view showing the portion A of FIG. 6.
FIG. 8 is an enlarged view showing the portion B of FIG. 6.

### BEST MODE

Hereinafter, embodiments of the present disclosure will be described in detail with reference to the accompanying drawings in order to clarify a solution to the technical problem of the present disclosure. However, in explaining the present disclosure, related known technologies will not be explained if the gist of the present disclosure becomes obscure due to the explanation. In addition, the following terms are defined in consideration of functions in the present disclosure, which may vary depending on the intention or custom of a designer, a manufacturer, or the like. Therefore, the definition should be based on the contents throughout this specification.

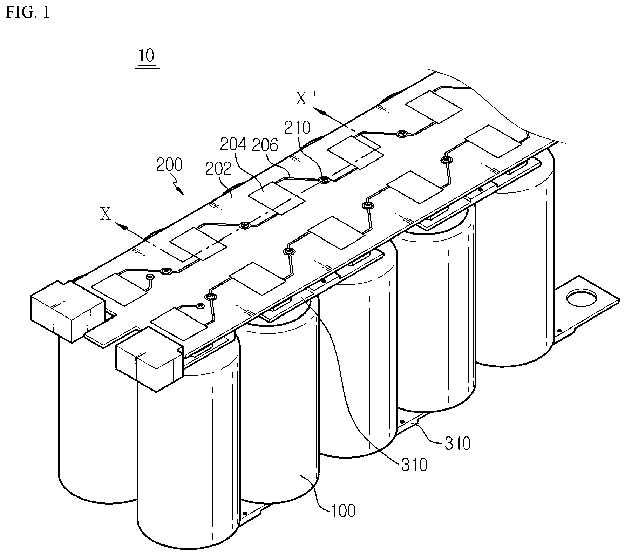

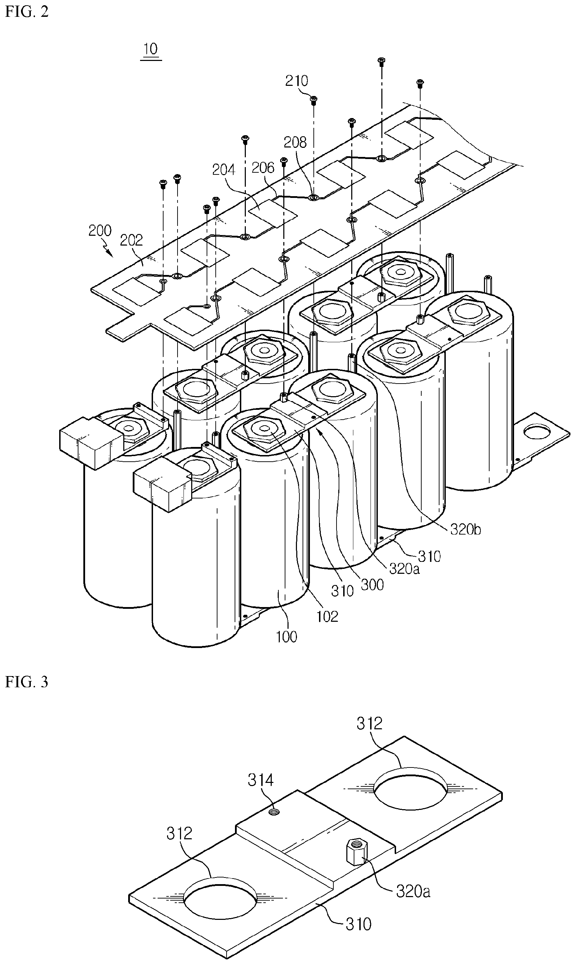

FIG. 1 is a perspective view showing an energy storage module 10 according to an embodiment of the present disclosure. FIG. 2 is an exploded perspective view showing a balancing circuit board 200 of the energy storage module depicted in FIG. 1, in a separated state.

As shown in FIGS. 1 and 2, an energy storage module 10 according to an embodiment of the present disclosure includes a plurality of energy storage cells 100, a balancing circuit board 200 and a connection structure 300.

The energy storage cell 100 may be a high-capacitance storage device such as an ultra-capacitor (UC), a super capacitor (SC) and an electric double layer capacitor (EDLC). Also, the energy storage cell 100 has a positive electrode and a negative electrode at one end and the other end thereof, respectively. For example, when a plurality of energy storage cells 100 are connected in series so that the energy storage module 10 is configured as a high-voltage module, the positive or negative electrode of the energy storage cell 100 is connected to a negative or positive electrode of another energy storage cell adjacent thereto. In this case, the electrodes of the energy storage cells are connected via a bus bar 310, explained later.

The balancing circuit board 200 is installed at an upper portion of the plurality of energy storage cells 100 connected in series or in parallel to maintain a voltage balance between the energy storage cells. To this end, the balancing circuit board 200 may include a balancing circuit 204 implemented on a printed circuit board (PCB) 202. The balancing circuit 204 performs energy balancing for the energy storage cells 100 to prevent overcharge and overdischarge. In this case, the balancing circuit 204 has a terminal 206 that is electrically connected to the electrode 102 of the energy storage cell 100. The terminal 206 of the balancing circuit 204 may have a conductive pattern formed on the PCB 202. In addition, the balancing circuit board 200 may further have an insert hole 208 into which a rod member 320a, 320b, explained later, is inserted. As will be described below, the terminal 206 of the balancing circuit 204 may be formed around or inside the insert hole 208 and electrically connected to the rod member 320a, 320b. In this case, the rod member 320a, 320b may be inserted into the insert hole 208 and then coupled to the insert hole 208 by fastening with a predetermined bolt member 210.

The connection structure 300 electrically connects the electrode 102 of the energy storage cell 100, explained above, to the terminal 206 of the balancing circuit 204.

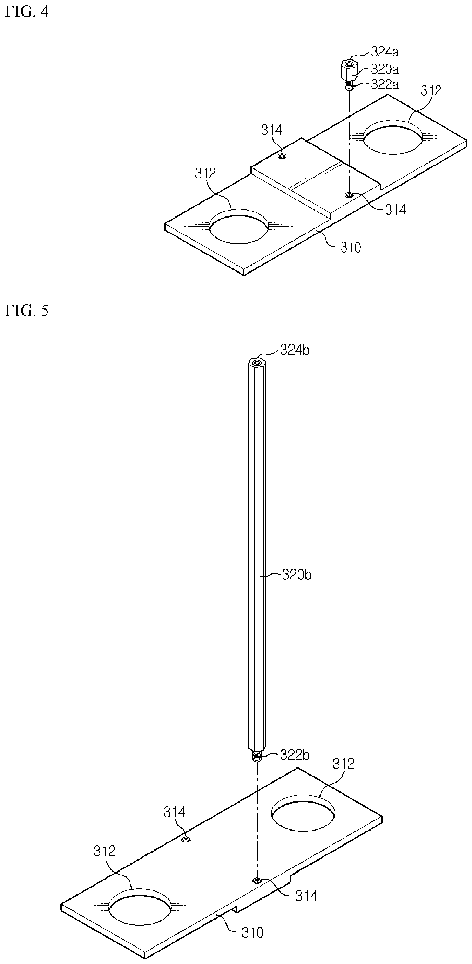

FIG. 3 is a perspective view showing a connection structure 300 for an energy storage module according to an embodiment of the present disclosure. FIG. 4 is an exploded perspective view showing the connection structure 300 for an energy storage module according to an embodiment of the present disclosure.

As shown in FIGS. 3 and 4, the connection structure 300 for an energy storage module according to an embodiment of the present disclosure configures an electrical connection structure at the energy storage module 10 that stores electric energy using the plurality of energy storage cells 100, and includes the bus bar 310 and the rod member 320a.

That is, the bus bar 310 is a conductive member with a plate shape as a whole, and both ends thereof are coupled to electrodes 102 of different energy storage cells 100, respectively. To this end, the bus bar 310 may have electrode coupling holes 312 formed at both ends thereof so that the electrodes 102 of the energy storage cells 100 are inserted therein, respectively. In this case, the electrode 102 of the energy storage cell 100 may have a male screw form having a thread formed at an outer circumference thereof, and may be coupled to the electrode coupling hole 312 by screwing with a female screw member (not shown). At this time, an outer diameter of a lower end of the female screw member (not shown) may be smaller than an inner diameter of the electrode coupling hole 312, and an outer diameter of an upper end thereof may be larger than the inner diameter of the electrode coupling hole 312.

The rod member 320a is a conductive member with a rod shape and has one end 322a coupled to the bus bar 310 and the other end 324a coupled to the balancing circuit board 200 so that the electrode 102 of the energy storage cell 1 00 which the bus bar 310 is coupled is electrically connected to the balancing circuit 204 of the balancing circuit board 200. In this case, one end 322a of the rod member 320a may be screwed to the bus bar 310. To this end, one end 322a of the rod member 320a may have a thread formed at an outer circumference thereof. In addition, the bus bar 310 may have a screw groove 314 screwed with one end 322a of the rod member 320a. In addition, the rod member may have an outer circumference of a polygonal shape to facilitate the screwing work of a worker using a wrench, a spanner, or the like.

Meanwhile, the other end 324a of the rod member 320a is inserted into the insert hole 208 provided at the balancing circuit board 200 and is electrically connected to the terminal 206 of the balancing circuit 204. To this end, the other end 324a of the rod member 320a may have a screw groove to which a predetermined bolt member 210 is screwed. In this case, the other end 324a of the rod member 320a may be electrically connected to the balancing circuit terminal 206 provided at the balancing circuit board 200 while fixing the balancing circuit board 200 along with the bolt member 210 screwed to the screw groove.

The length of the rod member 320a may be different depending on the position of the bus bar 310 that is coupled thereto.

FIG. 5 is an exploded perspective view showing a connection structure 300 for an energy storage module according to another embodiment of the present disclosure.

As shown in FIG. 5, the connection structure 300 for an energy storage module according to another embodiment of the present disclosure configures an electrical connection structure at the energy storage module 10 that stores electric energy using a plurality of energy storage cells 100, and includes a bus bar 310 and a rod member 320b. Here, the bus bar 310 and the rod member 320b may be explained with the same technical principle as the bus bar 310 and the rod member 320a depicted in FIGS. 3 and 4. It should be noted that the bus bar 310 depicted in FIGS. 3 and 4 is coupled to the top electrode of the energy storage cell 100 and thus the rod member 320a has a relatively short length. Meanwhile, the bus bar 310 depicted in FIG. 5 is coupled to the bottom electrode of the energy storage cell 100 and thus the rod member 320b has a long length corresponding to the height of the energy storage cell 100.

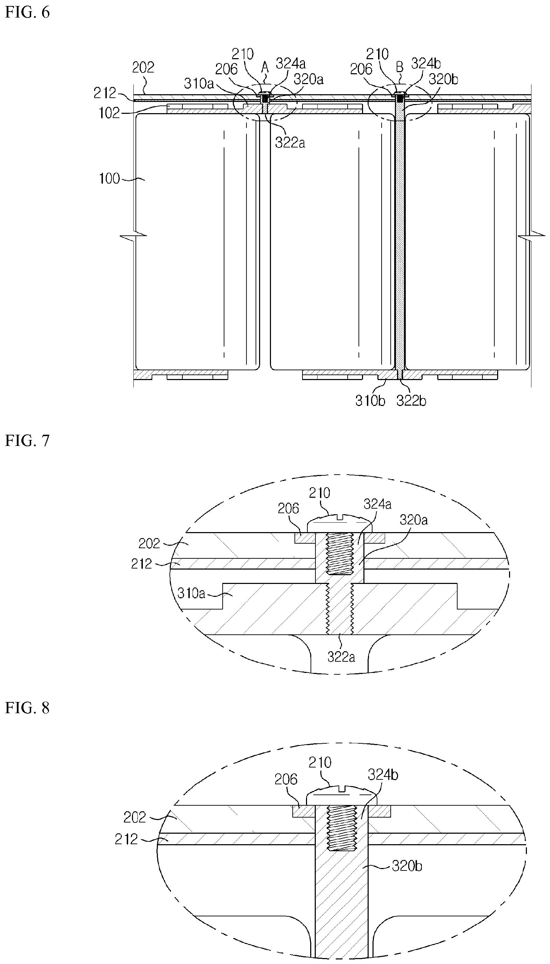

FIG. 6 is a vertical sectioned view, taken along the line X-X' of FIG. 1.

As shown in FIG. 6, the rod member 320a with a short length is coupled to a top bus bar 310a that connects top terminals of the energy storage cells 100. In this case, one end 322a of the rod member 320a may be screwed to the screw groove of the top bus bar 310a. Also, the rod member 320b with a relatively long length is coupled to a bottom bus bar 320b that connects bottom terminals of the energy storage cells 100. In this case, one end 322b of the rod member 320b may be screwed to the screw groove of the bottom bus bar 310b.

If the plurality of energy storage cells 100 and the connection structure 300 are configured as described above, a PCB 202 constituting the balancing circuit board 200 is installed thereon. An insulating member 212 may be interposed between the PCB 202 and the energy storage cell 100 to prevent a short circuit. Meanwhile, the other ends 324a, 324b of the rod members 310a, 320b are inserted into the corresponding insertion holes 208 of the balancing circuit board 200, respectively.

FIG. 7 is an enlarged view showing the portion A of FIG. 6. FIG. 8 is an enlarged view showing the portion B of FIG. 6.

As shown in FIGS. 7 and 8, if the other ends 324a, 324b of the rod members 310a, 320b are inserted into the corresponding insertion holes 208 of the balancing circuit board 200, the bolt members 210 are inserted into the screw grooves formed at the other ends 324a, 324b of the rod members 310a, 320b, respectively. As a result, the rod members 310a, 320b fix the balancing circuit board 200 along with the bolt member 210 and are electrically connected to the balancing circuit terminal 206 provided at the balancing circuit board 200 through the bolt member 210. For this purpose, the bolt member 210 may be made of a conductive material such as a metal.

As described above, since the electrode of the energy storage cell and the energy balancing circuit are electrically connected through the rod member coupled to the bus bar, it is possible to solve erroneous wiring or disconnection problems caused by using a harness and prevent the energy balancing circuit from malfunctioning. Also, when the energy balancing circuit board is installed, the rod members connected to the bus bar are inserted into the insert holes of the board provided at predetermined positions, respectively, and connected to the corresponding energy balancing circuits just by bolt fastening, and thus it is possible to save manpower and time consumed in the wiring work and simplify the assembly process for the energy storage module.

The present disclosure has been explained with reference to specific embodiments. However, it will be clearly understood by those skilled in the art that various modifications can be made within the technical scope of the present disclosure. Therefore, the above-described embodiments should be considered from an illustrative point of view, not from a restrictive point of view. That is, the true scope of the present disclosure is set forth in the appended claims.

## Claims

1. A connection structure for an energy storage module, which configures an electrical connection structure in an energy storage module (10) that stores electric energy by using a plurality of energy storage cells, the connection structure comprising:
a bus bar (310) having a plate shape, the bus bar (310) having both ends respectively coupled to electrodes of different energy storage cells; and
a rod member (320a) or (320b) having a rod shape, the rod member (320a) or (320b) having one end (322a) or (322b) coupled to the bus bar (310) and the other end (324a) or (324b) coupled to a board (202) of a balancing circuit (204) that performs energy balancing so that the electrode (102) of the energy storage cell (100) to which the bus bar (310) is coupled is electrically connected to the balancing circuit (204),
wherein the rod member (320a) or (320b) has an outer circumference of a polygonal shape to facilitate the screwing,
wherein one end (322a) or (322b) of the rod member (320a) or (320b) has a thread formed at an outer circumference thereof,
wherein the bus bar (310) has a screw groove (314) screwed to one end (322a) or (322b) of the rod member (320a) or (320b),
wherein one end (322a) or (322b) of the rod member (320a) or (320b) is screwed to the screw groove (314) of the bus bar (310), and
wherein the other end (324a) or (324b) of the rod member (320a) or (320b) is inserted into a predetermined insert hole (208) provided at the board (202) and electrically connected to a terminal (206) of the balancing circuit (204)

2. The connection structure for an energy storage module according to claim 1, wherein the other end (324a) or (324b) of the rod member (320a) or (320b) has a screw groove to which a predetermined bolt member (210) is screwed.

3. The connection structure for an energy storage module according to claim 1, wherein the other end (324a) or (324b) of the rod member (320a) or (320b) is electrically connected to the terminal (206) of the balancing circuit (204) by the bolt member (210) coupled to the screw groove.

## Patentansprüche

1. Verbindungsstruktur für ein Energiespeichermodul, welche eine elektrische Verbindungsstruktur in einem Energiespeichermodul (10) konfiguriert, das elektrische Energie unter Verwendung einer Vielzahl von Energiespeicherzellen speichert, wobei die Verbindungsstruktur umfasst:
eine Sammelschiene (310) mit einer Plattenform, wobei beide Enden der Sammelschiene (310) jeweils mit Elektroden unterschiedlicher Energiespeicherzellen gekoppelt sind; und
ein Stabelement (320a) oder (320b) mit einer Stabform, wobei das Stabelement (320a) oder (320b) mit einem Ende (322a) oder (322b) mit der Sammelschiene (310) gekoppelt ist und mit dem anderen Ende (324a) oder (324b) mit einer Platine (202) einer Ausgleichsschaltung (204) gekoppelt ist, die einen Energieausgleich durchführt, so dass die Elektrode (102) der Energiespeicherzelle (100), mit der die Sammelschiene (310) gekoppelt ist, elektrisch mit der Ausgleichsschaltung (204) verbunden ist,
wobei das Stabelement (320a) oder (320b) einen Außenumfang von polygonaler Form hat, um das Schrauben zu erleichtern,
wobei ein Ende (322a) oder (322b) des Stabelements (320a) oder (320b) ein an einem Außenumfang davon ausgebildetes Gewinde aufweist,
wobei die Sammelschiene (310) eine Schraubnut (314) aufweist, die an ein Ende (322a) oder (322b) des Stabelements (320a) oder (320b) geschraubt ist,
wobei ein Ende (322a) oder (322b) des Stabelements (320a) oder (320b) an die Schraubnut (314) der Sammelschiene (310) geschraubt ist, und
wobei das andere Ende (324a) oder (324b) des Stabelements (320a) oder (320b) in ein vorgegebenes Einführloch (208) eingeführt wird, das an der Platine (202) vorgesehen ist und elektrisch mit einem Anschluss (206) der Ausgleichsschaltung (204) verbunden ist.

2. Verbindungsstruktur für ein Energiespeichermodul nach Anspruch 1, wobei das andere Ende (324a) oder (324b) des Stabelements (320a) oder (320b) eine Schraubnut aufweist, an die ein vorgegebenes Bolzenelement (210) geschraubt ist.

3. Verbindungsstruktur für ein Energiespeichermodul nach Anspruch 1, wobei das andere Ende (324a) oder (324b) des Stabelements (320a) oder (320b) durch das mit der Schraubnut gekoppelte Bolzenelement (210) elektrisch mit dem Anschluss (206) der Ausgleichsschaltung (204) verbunden ist.

## Revendications

1. Structure de connexion pour un module de stockage d'énergie, qui configure une structure de connexion électrique dans un module de stockage d'énergie (10) qui stocke de l'énergie électrique en utilisant une pluralité de cellules de stockage d'énergie, la structure de connexion comprenant :
une barre omnibus (310) ayant une forme de plaque, la barre omnibus (310) ayant les deux extrémités respectivement couplées à des électrodes de différentes cellules de stockage d'énergie ; et
un élément tige (320a) ou (320b) ayant une forme de tige, l'élément tige (320a) ou (320b) ayant une extrémité (322a) ou (322b) couplée à la barre omnibus (310) et l'autre extrémité (324a) ou (324b) couplée à une carte (202) d'un circuit d'équilibrage (204) qui effectue un équilibrage d'énergie de telle sorte que l'électrode (102) de la cellule de stockage d'énergie (100) à laquelle est couplée la barre omnibus (310) est électriquement connectée au circuit d'équilibrage (204),
dans laquelle l'élément tige (320a) ou (320b) présente une circonférence extérieure d'une forme polygonale pour faciliter le vissage,
dans laquelle une extrémité (322a) ou (322b) de l'élément tige (320a) ou (320b) comporte un filetage formé au niveau d'une circonférence extérieure de celle-ci,
dans laquelle la barre omnibus (310) comporte une rainure de vis (314) vissée sur une extrémité (322a) ou (322b) de l'élément tige (320a) ou (320b),
dans laquelle une extrémité (322a) ou (322b) de l'élément tige (320a) ou (320b) est vissée sur la rainure de vis (314) de la barre omnibus (310), et
dans laquelle l'autre extrémité (324a) ou (324b) de l'élément tige (320a) ou (320b) est insérée dans un trou d'insertion (208) prédéterminé situé au niveau de la carte (202) et électriquement connectée à une borne (206) du circuit d'équilibrage (204).

2. Structure de connexion pour un module de stockage d'énergie selon la revendication 1, dans laquelle l'autre extrémité (324a) ou (324b) de l'élément tige (320a) ou (320b) comporte une rainure de vis sur laquelle est vissé un élément boulon (210) prédéterminé.

3. Structure de connexion pour un module de stockage d'énergie selon la revendication 1, dans laquelle l'autre extrémité (324a) ou (324b) de l'élément tige (320a) ou (320b) est électriquement connectée à la borne (206) du circuit d'équilibrage (204) par l'élément boulon (210) couplé à la rainure de vis.
